# EUROPÄISCHE PATENTSCHRIFT

(11) **EP 3 096 649 B1**
(45) Veröffentlichungstag und Bekanntmachung des Hinweises auf die Patenterteilung: **19.07.2017**
(21) Anmeldenummer: 14825244.8
(22) Anmeldetag: 26.11.2014
(51) Int. Cl.: A47B 88/493

(54) **SCHUBLADENAUSZIEHFÜHRUNG**
DRAWER PULL-OUT GUIDE
GLISSIÈRE TÉLESCOPIQUE DE TIROIR

(30) Priorität: 23.01.2014 AT 452014
(43) Veröffentlichungstag der Anmeldung: 30.11.2016
(73) Patentinhaber: Julius Blum GmbH, 6973 Höchst (AT)
(72) Erfinder: BERCHTOLD, Pascal, A-6861 Alberschwende (AT); FINK, David, A-6934 Sulzberg (AT); MEUSBURGER, Marc, A-6863 Egg (AT); BOCH, Daniel, 88145 Opfenbach (DE); MOHR, Gernot, A-6922 Wolfurt (AT); BÖSCH Albert, A-6974 Gaißau (AT); NACHBAUER, Philipp, A-6812 Meiningen (AT); GRABHERR, Simon, A-6973 Höchst (AT)
(74) Vertreter: Torggler & Hofinger Patentanwälte
(86) Internationale Anmeldenummer: PCT/AT2014/000210
(87) Internationale Veröffentlichungsnummer: WO 2015/109345

(56) Entgegenhaltungen:
- GB-A- 515 899
- US-A1- 2008 258 592

## Beschreibung

Die vorliegende Erfindung bezieht sich auf eine Schubladenausziehführung, umfassend:
- eine an einem Möbelkorpus zu befestigende Korpusschiene,
- zumindest eine Ausziehschiene, welche relativ zur Korpusschiene zwischen einer Schließstellung und einer Offenstellung verschiebbar gelagert ist,
- zumindest zwei, insbesondere drei oder mehrere, Wälzkörper und zumindest ein Abstützkörper, welche bei einer Bewegung der Ausziehschiene entlang einem Laufsteg der Korpusschiene und einer Lauffläche der Ausziehschiene bewegbar gelagert sind,
- eine am Laufsteg der Korpusschiene und/oder eine an der Lauffläche der Ausziehschiene angeordnete Freistellung, in welcher die zumindest zwei Wälzkörper in der Schließstellung der Ausziehschiene gemeinsam aufnehmbar sind, und dabei von der Last der Ausziehschiene entlastet sind und dass in der Schließstellung der Ausziehschiene die Last der Ausziehschiene von dem zumindest einen Abstützkörper aufgenommen ist, wobei die zumindest zwei Wälzkörper und der zumindest eine Abstützkörper in einem gemeinsamen Laufwagen angeordnet sind.

Im Weiteren betrifft die Erfindung eine Anordnung mit einer Schubladenausziehführung der zu beschreibenden Art sowie mit einer Schublade, welche durch die Schubladenausziehführung in Montagelage relativ zu einem Möbelkorpus verfahrbar gelagert ist.

Bei derartigen Schubladenausziehführungen wird die Last der Schublade über Wälzkörper übertragen, die unterschiedlichen Belastungszuständen ausgesetzt sind. Bei einem längeren Stillstand der Schublade in deren Schließstellung werden nämlich die vordersten Wälzkörper - nicht zuletzt wegen dem erheblichen Gewicht einer Schubladenfrontblende - am stärksten belastet, was mit der Zeit zu einer Umfangsverformung bzw. Abplattung oder sogar zu einem Bruch der Wälzkörper führen kann. Durch diese mechanische Beanspruchung der Wälzkörper kann das Laufverhalten und damit die Funktionalität der Schubladenausziehführung nachteilig beeinträchtigt und somit auch die Lebensdauer verkürzt werden.

Eine Maßnahme zur Vermeidung solcher Abplattungen von Wälzkörpern ist in der EP 2 079 342 B1 der Anmelderin beschrieben. Hierbei ist ein zwischen den Schienen verfahrbarer Laufwagen mit einer Wälzkörpergruppe vorgesehen, wobei an einem vorderen Ausleger des Laufwagens - beabstandet zur Wälzkörpergruppe - zumindest ein weiteres lastübertragendes Element gelagert ist. Im Schließzustand der Ausziehschiene wird die Last der Schublade von diesem lastübertragenden Element aufgenommen, sodass in der Schließstellung die Wälzkörpergruppe weitgehend entlastet und folglich vor Deformation geschützt ist. In einer Offenstellung der Ausziehschiene wird hingegen das lastübertragende Element über das vordere Ende einer Schiene der Schubladenausziehführung hinwegbewegt, wobei die Last der Ausziehschiene von der Wälzkörpergruppe aufgenommen wird. Allerdings wird auch in der Schließstellung der Ausziehschiene die Wälzkörpergruppe teilweise belastet, was zu einer Deformation der Wälzkörper führen kann. Auch ist die Konstruktion des dort gezeigten Laufwagens eine Sonderform, welche relativ voluminös und mit erhöhten Kosten in der Herstellung verbunden ist.

In der DE 197 51 384 A1 und in der GB 515,899 A sind jeweils Ausziehvorrichtungen für Schubkästen gezeigt, wobei mehrere in Längsrichtung der Ausziehschiene voneinander beabstandete Laufrollen drehbar an der Ausziehschiene gelagert sind. In der Schließstellung können diese Laufrollen jeweils in Vertiefungen der stationären Schiene einfahren, sodass die Laufrollen vom Gewicht der Schublade entlastet und eine unerwünschte Öffnungsbewegung der Ausziehvorrichtung verhindert wird. Nachteilig daran ist, dass zum Öffnen der Ausziehvorrichtung eine relativ große Kraft erforderlich ist, weil die Laufrollen jeweils aus den ihnen zugeordneten Vertiefungen herausbewegt werden müssen. Dies führt beim Öffnen und Schließen der Ausziehführungen zu abrupten Übergängen, die das Laufverhalten der Ausziehführung nachteilig beeinträchtigen. Überdies sind die Durchmesser der Laufrollen aus Gründen der Stabilität relativ groß zu dimensionieren, wodurch sich der Bauraum erheblich vergrößert.

Eine weitere Schubladenausziehführung ist aus US2008/0258592A bekannt. Aufgabe der vorliegenden Erfindung ist es, eine Schubladenausziehführung der eingangs erwähnten Gattung unter Vermeidung obiger Nachteile anzugeben.

Dies wird erfindungsgemäß durch die Merkmale des Patentanspruchs 1 gelöst. Weitere vorteilhafte Ausgestaltungen der Erfindung sind in den abhängigen Unteransprüchen angegeben.

Durch die Anordnung in einem gemeinsamen Laufwagen kann der Rollwiderstand der Schubladenausziehführung reduziert werden, weil die Durchmesser der Wälzkörper und der Abstützkörper im Vergleich zu stationären Laufrollen wesentlich geringer dimensioniert werden können. Die Übergänge zwischen der Schließstellung und der Offenstellung erfolgen dadurch weitgehend stockungsfrei, wobei die Lastverteilung der Schubladenausziehführung gleichmäßiger erfolgt.

In der Schließstellung sind die zumindest zwei Wälzkörper innerhalb der Freistellung einer Schiene aufgenommen und folglich von der Last der Ausziehschiene entlastet, während sich der zumindest eine Abstützkörper außerhalb dieser Freistellung befindet und dabei die Last der Ausziehschiene aufnimmt. Die zumindest zwei Wälzkörper, welche sich in der Schließstellung der Ausziehschiene innerhalb der Freistellung befinden, sind in dieser Position keiner Gewichtskraft und daher auch keinem vorzeitigen Verschleiß ausgesetzt.

Es ist dabei unerheblich, ob der außerhalb der Freistellung angeordnete Abstützkörper durch die Gewichtskraft der in der Schließstellung befindlichen Schublade belastet und dabei deformiert wird oder nicht, weil dieser Abstützkörper in einer Offenstellung der Ausziehschiene nicht mehr als ein an einem Laufsteg abrollender Wälzkörper in Aktion tritt und somit auf das Laufverhalten der Schubladenausziehführung keinen Einfluss hat. Der Vorteil dieser Konstruktion liegt also zunächst in einer klaren Funktionstrennung der dynamischen Wälzkörper (welche bei einer Bewegung der Ausziehschiene entlang einem Laufsteg der Schienen abrollen) und der statischen Abstützkörper (welche in der Schließstellung der Ausziehschiene die Last der Schublade aufnehmen). Zudem sind - im Vergleich zur Konstruktion gemäß der EP 2 079 342 B1 - auch kürzere und kostengünstigere Bauformen von Laufwagen einsetzbar. Insbesondere sind auch standardmäßige Laufwagen problemlos verwendbar, die mit keinen zusätzlichen Bauteilen versehen werden müssen.

Vorzugsweise sind die zumindest zwei Wälzkörper und der zumindest eine Abstützkörper aus einem Kunststoffmaterial hergestellt. Falls erforderlich - beispielsweise bei einer erheblichen Belastung durch schwere Schubladenfrontblenden - kann der zumindest eine Abstützkörper auch aus Stahl gebildet sein. Erfindungsgemäß sind zwei oder mehrere Wälzkörper vorgesehen, welche in der Schließstellung der Ausziehschiene in der Freistellung aufgenommen sind. Erfindungsgemäß ist dabei vorgesehen, dass wenigstens zwei der zwei oder mehreren Wälzkörper einen verschiedenen Durchmesser aufweisen. Hierbei ist eine gestufte Ausbildung der Durchmesser der Wälzkörper vorgesehen, nämlich dahingehend, dass der Durchmesser der Wälzkörper in Richtung zum frontseitigen Ende der Ausziehschiene hin - vorzugsweise monoton - abnimmt. Dies hat den besonderen Vorteil, dass sich die Gewichtskräfte bei einer im ausgezogenen Zustand und unter Belastung befindlichen Ausziehschiene (nämlich wenn sich das frontseitige Ende der Ausziehschiene nach unten biegt) gleichmäßiger auf die verschieden großen Wälzkörper verteilen kann.

Bei einem zweiteiligen Schienensystem kann die besagte Ausziehschiene als eine mit der Schublade zu verbindende Ladenschiene ausgebildet sein. Bei einem dreiteiligen Schienensystem, welches einen Vollauszug einer Schublade relativ zur Stirnseite des Möbelkorpus ermöglicht, kann die besagte Ausziehschiene als Ladenschiene und/oder als Mittelschiene ausgebildet sein.

Der zumindest eine Abstützkörper kann gemäß einem Ausführungsbeispiel ebenfalls als Wälzkörper ausgebildet sein. Es ist aber nicht zwingend notwendig, dass sich der Abstützkörper bei einer Bewegung der Ausziehschiene an einem Laufsteg einer Schiene abwälzt.

Weitere Einzelheiten und Vorteile der gegenständlichen Erfindung werden anhand der in den Figuren gezeigten Ausführungsbeispiele erläutert. Dabei zeigt bzw. zeigen:
- Fig. 1: eine perspektivische Darstellung eines Möbels mit Schubladen, welche über Schubladenausziehführungen relativ zu einem Möbelkorpus verfahrbar gelagert sind,
- Fig. 2: eine Schubladenausziehführung in einer perspektivischen Ansicht,
- Fig. 3: die in der Schließstellung befindliche Schubladenausziehführung gemäß Fig. 2 in einem perspektivischen Schnitt,
- Fig. 4a, 4b: die Schubladenausziehführung in einem Querschnitt sowie eine vergrößerte Detaildarstellung hierzu,
- Fig. 5a-5c: eine zeitliche Abfolge des Öffnungsvorganges der Schubladenausziehführung in stark schematisierten Ansichten,
- Fig. 6a-6c: eine zeitliche Abfolge des Öffnungsvorganges der Schubladenausziehführung in stark schematisierten Ansichten, wobei eine Freistellung in Form einer Öffnung bzw. Aussparung in einer Lauffläche der Mittelschiene ausgebildet ist,
- Fig. 7: die Schubladenausziehführung mit unterschiedlich großen Wälzkörpern und Stützkörpern in einer stark schematisierten Darstellung.

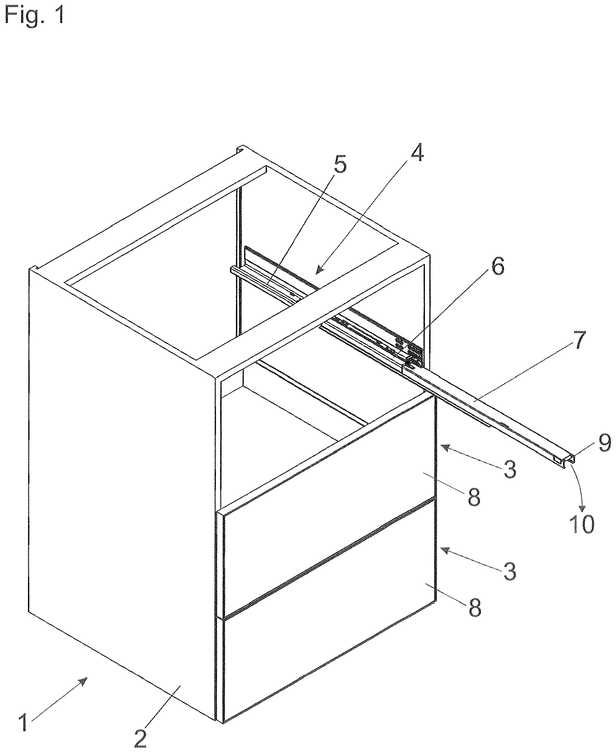

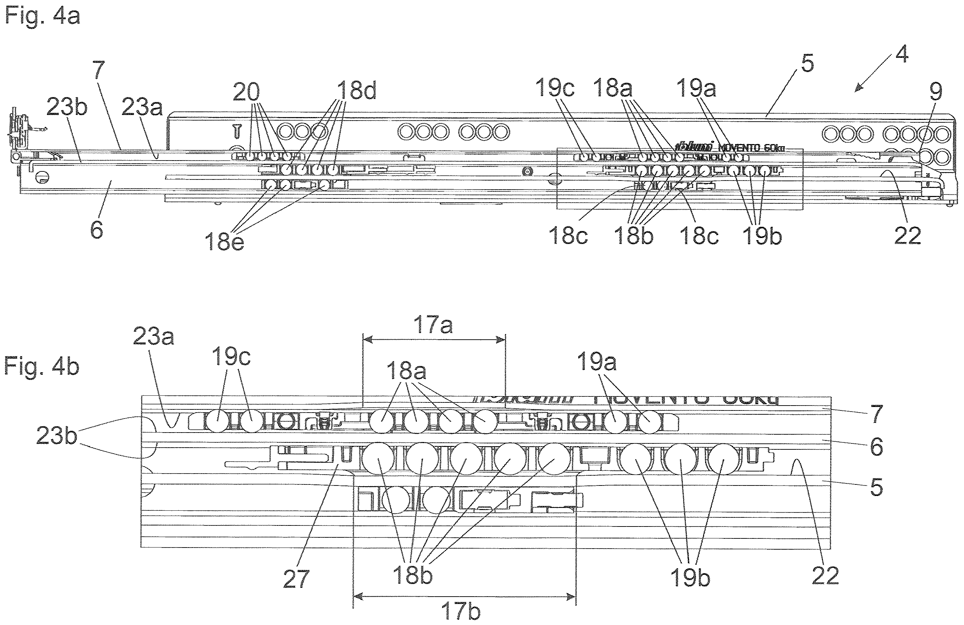

Fig. 1 zeigt eine perspektivische Ansicht eines Möbels 1 mit Schubladen 3, welche über Schubladenausziehführungen 4 relativ zu einem Möbelkorpus 2 verfahrbar gelagert sind. Die Schubladenausziehführung 4 ist im gezeigten Ausführungsbeispiel als Vollauszug mit einem dreiteiligen Schienensystem ausgebildet, wobei also eine am Möbelkorpus 2 zu befestigende Korpusschiene 5, eine an der Schublade 3 zu befestigende Ladenschiene 7 und eine zwischen der Korpusschiene 5 und der Ladenschiene 7 verfahrbar gelagerte Mittelschiene 6 vorgesehen sind. Zur verfahrbaren Lagerung der Schienen 5, 6, 7 zueinander sind (hier nicht ersichtliche) Wälzkörper (Bezugszeichen 18a-18e und 20 in Fig. 4a) vorgesehen, welche in oder an einem zwischen den Schienen 5, 6, 7 verfahrbaren Laufwagen 27 (Fig. 4b) gelagert sind. Die Schubladenausziehführung 4 befindet sich in der gezeigten Figur in der vollständigen Offenstellung, wobei jene Wälzkörper 18a, 18b, welche sich in der Nähe zum frontseitigen Ende 9 der Ladenschiene 7 befinden, durch die Last der Schubladenfrontblende 8 in Richtung des eingezeichneten Pfeils 10 erheblich belastet werden, insbesondere dann, wenn sich die Schublade 3 über einen längeren Zeitraum in der vollständigen Schließstellung befindet. Diese Belastung kann mit der Zeit zu Deformationen oder auch zu einem Bruch der - insbesondere vordersten - Wälzkörper 18a, 18b führen, womit die Funktionalität der Schubladenausziehführung 4 nicht mehr gewährleistet wäre.

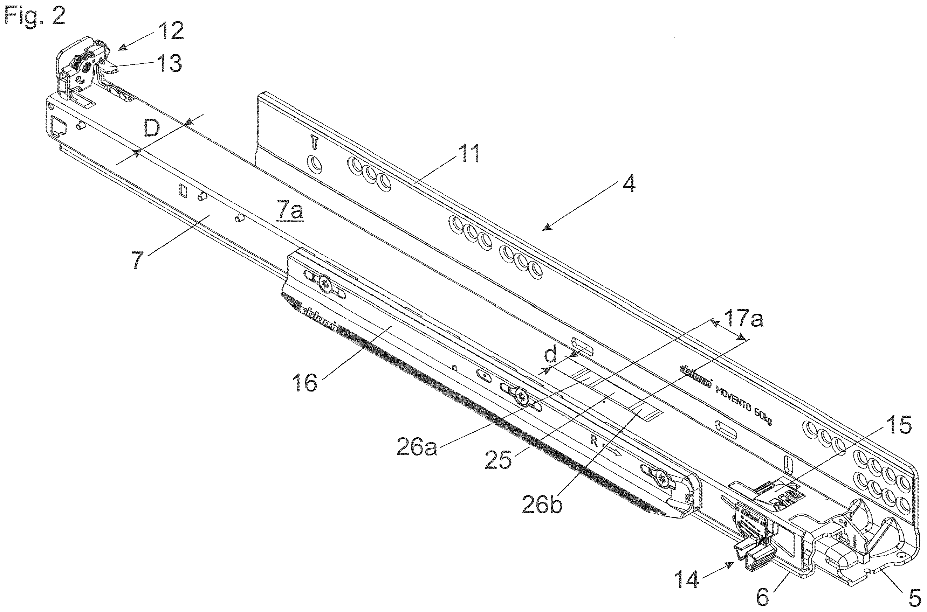

Fig. 2 zeigt die Schubladenausziehführung 4 in einer perspektivischen Ansicht. Die Korpusschiene 5 ist über einen Befestigungsabschnitt 11 am Möbelkorpus 2 zu montieren, während die Ladenschiene 7 mit der Schublade 3 verbindbar ist. Zwischen der stationären Korpusschiene 5 und der Ladenschiene 7 ist eine verfahrbare Mittelschiene 6 gelagert, wodurch ein Vollauszug der Schublade 3 relativ zum Möbelkorpus 2 möglich ist. Die Ladenschiene 7 ist mit einer Befestigungsvorrichtung 12 mit einem verstellbaren Zapfen 13 versehen, wobei durch eine Verstellung des Zapfens 13 (der in einer Bohrung der Schubladenrückwand anordenbar ist) der rückseitige Endbereich der Schublade 3 anhebbar und absenkbar ist. Auf diese Weise ist die Neigung der Frontblende 8 (Fig. 1) relativ zum Möbelkorpus 2 einstellbar. Durch eine Einstellvorrichtung 14 mit einem höhenverstellbaren Anschlag 15 ist die Höhe der Frontblende 8 in Montagelage einstellbar. Ferner umfasst die Schubladenausziehführung 4 eine federunterstützte Einzugsvorrichtung 16, durch welche die Ladenschiene 7 (und damit die Schublade 3) gegen Ende der Schließbewegung mit Federkraft in die vollständig geschlossene Endlage einziehbar ist.

Zu erkennen ist eine an der Ladenschiene 7 ausgebildete Freistellung 17a in Form einer in Montagelage nach oben weisenden und haptisch erkennbaren Prägung, welche in der Schließstellung der Ladenschiene 7 zur Entlastung von zwischen den Schienen 5, 6, 7 gelagerten Wälzkörpern 18a vorgesehen ist. Diese Freistellung 17a weist einen im Wesentlichen ebenen Boden 25 auf, wobei die Wälzkörper 18a über zumindest eine Schräge 26a, 26b in die Freistellung 17a bewegbar sind. Auf diese Weise sind die Wälzkörper 18a ohne eine störende Stoßkante in die Freistellung 17a hinein bzw. heraus bewegbar. Die Ladenschiene 7 weist einen horizontalen Steg 7a mit einer Breite (D) auf, wobei die Breite (d) der Freistellung 17a kleiner als die Breite (D) des horizontalen Steges 7a der Ladenschiene 7 ist. Auf diese Weise wird vermieden, dass die Ladenschiene 7 durch die Anbringung der Freistellung 17a lokal geschwächt wird. Die Freistellung 17a befindet sich im gezeigten Ausführungsbeispiel im vordersten Drittel der Länge der Ladenschiene 7.

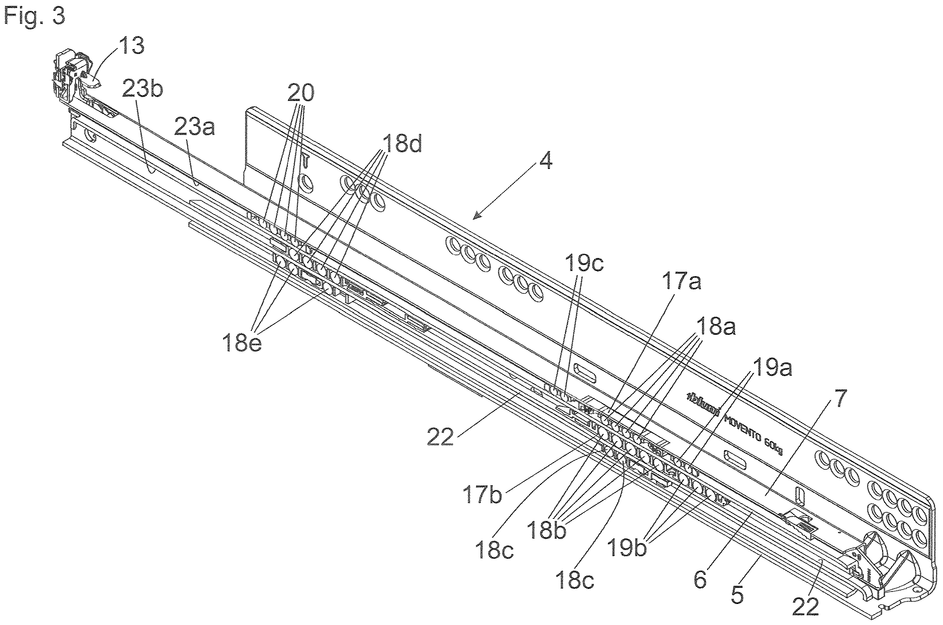

Fig. 3 zeigt die in der vollständigen Schließstellung befindliche Schubladenausziehführung 4 gemäß Fig. 2 in einem perspektivischen Schnitt. Zwischen der Mittelschiene 6 und der Ladenschiene 7 ist zumindest ein Wälzkörper 18a (im vorliegenden Fall vier Wälzkörper 18a) gelagert, der entlang einer in Längsrichtung der Ladenschiene 7 verlaufenden Lauffläche 23a der Ladenschiene 7 abrollbar ist. Die Wälzkörper 18a sind in der Schließstellung in einer Freistellung 17a der Ladenschiene 7 aufgenommen und werden dabei von der Last der Ladenschiene 7 entlastet. Zudem ist zwischen der Mittelschiene 6 und der Ladenschiene 7 zumindest ein Abstützkörper 19a (im vorliegenden Fall zwei Abstützkörper 19a) gelagert, welcher in der Schließstellung der Ladenschiene 7 die Last der Schublade 3 aufnimmt. Im gezeigten Ausführungsbeispiel sind die beiden Abstützkörper 19a ebenfalls als Wälzkörper ausgebildet. Die in der Freistellung 17a befindlichen Wälzkörper 18a sind daher in der Schließstellung der Ladenschiene 7 unter Bildung eines Spaltes von der Lauffläche 23a der Ladenschiene 7 beabstandet und daher auch keinen vertikalen Kräften ausgesetzt, welche zu einer Deformation oder einem Bruch der Wälzkörper 18a führen könnten. In der Schließstellung der Ladenschiene 7 wird die Gewichtskraft von den Abstützkörpern 19a und 19c aufgenommen, welche sich links und rechts von den Wälzkörpern 18a befinden.

Überdies ist im gezeigten Ausführungsbeispiel auch der Laufsteg 22 der Korpusschiene 5 mit einer Freistellung 17b versehen. Diese Freistellung 17b kann - ebenso wie die Freistellung 17a - als eine in der Korpusschiene 5 ausgebildete Mulde oder Aussparung ausgebildet sein, welche die Wälzkörper 18b (welche zwischen der Korpusschiene 5 und der Mittelschiene 6 gelagert sind) in der Schließstellung aufnehmen. Auf diese Weise sind die Wälzkörper 18b in der Schließstellung von der Last der Schublade 3 entlastet und vor Deformation geschützt, die Last wird hierbei von den Abstützkörpern 19b aufgenommen. Unterhalb der Wälzkörper 18b befinden sich noch zumindest zwei Wälzkörper 18c, welche an der Unterseite des Laufsteges 22 der Korpusschiene 5 zur Anlage kommen. Die an der Unterseite des Laufsteges 22 anliegenden Wälzkörper 18c sind zusammen mit den Wälzkörpern 18b und den davon beabstandeten Wälzkörpern 18d und 18e in einem gemeinsamen Laufwagen 27 angeordnet. Im hinteren Endbereich befindet sich noch ein gesonderter Laufwagen, der zur Aufnahme der Wälzkörper 20 vorgesehen ist. Diese Wälzkörper 20 sind zwischen der Mittelschiene 6 und der Ladenschiene 7 gelagert.

Fig. 4a zeigt die Schubladenausziehführung 4 in einem Querschnitt. Die Korpusschiene 5 weist einen Laufsteg 22, die Mittelschiene 6 eine Lauffläche 23b und die Ladenschiene 7 eine Lauffläche 23a auf, entlang denen die verschiedenen Wälzkörper 18a-18e ablaufen können, wobei die Wälzkörper 18a und 18b in der Schließstellung der Schubladenausziehführung 4 jeweils durch die Anordnung einer Freistellung 17a, 17b entlastet sind. Die Gewichtskraft wird in der Schließstellung von den Abstützkörpern 19a, 19b, 19c aufgenommen.

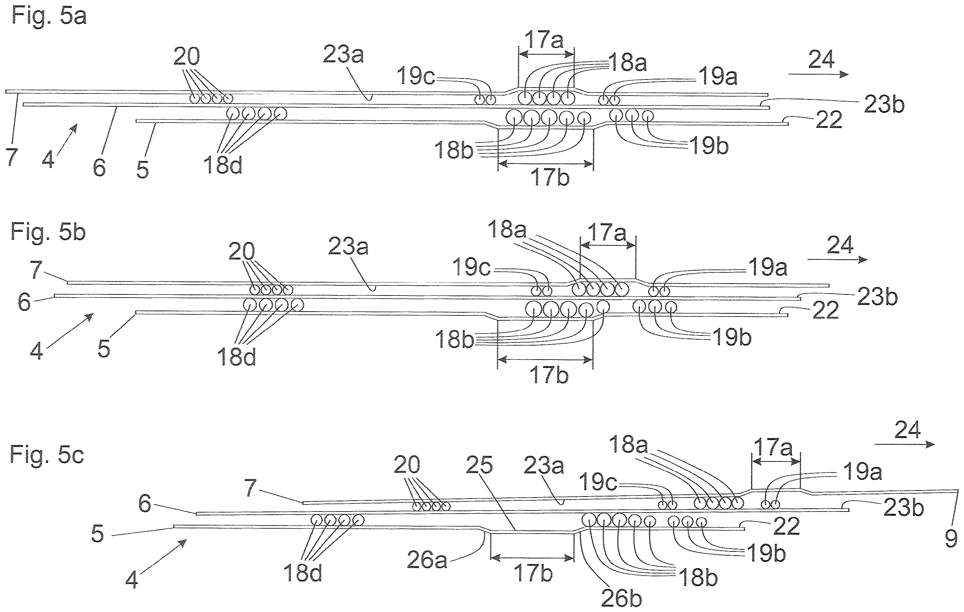

Fig. 4b zeigt den in Fig. 4a eingerahmten Bereich in einer vergrößerten Darstellung. Der Laufsteg 22 der Korpusschiene 5 weist eine wannenförmige Freistellung 17b auf, in welcher in der Schließstellung der Schubladenausziehführung 4 die Wälzkörper 18b aufgenommen und somit von der auftretenden Gewichtskraft entlastet sind. In der unteren Ebene wird die Last von den vorderen Abstützkörpern 19b aufgenommen. Die Freistellung 17a ist in der Lauffläche 23a der Ladenschiene 7 ausgebildet. In der oberen Ebene wird die Last von den Abstützkörpern 19a, 19c aufgenommen. Ebenso wäre es möglich, eine Freistellung 17a, 17b in der oberen bzw. unteren Lauffläche 23b der Mittelschiene 6 zur Entlastung der Wälzkörper 18a, 18b auszubilden, wodurch diese in der Schließstellung der Schubladenausziehführung 4 entlastet werden können. Erfindungsgemäß ist es vorgesehen, dass wenigstens zwei der zwei oder mehreren Wälzkörper 18a, 18b innerhalb des gemeinsamen Laufwagens 27 einen verschiedenen Durchmesser aufweisen. Erfindungsgemäß nimmt der Durchmesser der Wälzkörper 18a, 18b in Richtung zum frontseitigen Ende 9 der Ausziehschienen 6, 7 hin monoton ab, wodurch die Gewichtskraft in einer Offenstellung der Schubladenausziehführung 4 gleichmäßiger auf die Wälzkörper 18a, 18b verteilt wird. Im diesem Sinne ist es auch günstig, wenn der Durchmesser der Abstützkörper 19a, 19b, 19c kleiner als der Durchmesser der Wälzkörper 18a, 18b ist. In der gezeigten Figur sind zwei oder mehrere Abstützkörper 19a, 19b, 19c vorgesehen, welche sich in der Schließstellung der Schubladenausziehführung 4 außerhalb der Freistellungen 17a, 17b befinden und dabei die Last der Schublade 3 aufnehmen. Die Abstützkörper 19a, 19b, 19c können jeweils einen gleichen Durchmesser aufweisen. Gemäß einem alternativen Ausführungsbeispiel kann aber auch der Durchmesser der Abstützkörper 19a, 19b in Richtung zum frontseitigen Ende der Schubladenausziehführung 4 hin monoton abnehmen, wobei also jeweils der vorderste Abstützkörper 19a, 19b kleiner als die anderen Abstützkörper 19a, 19c ausgebildet ist. Fig. 5a-5c zeigen stark schematisiert den Ablauf des Öffnungsvorganges der Schubladenausziehführung 4. In der vollständigen Schließstellung gemäß Fig. 5a befinden sich sowohl die oberen Wälzkörper 18a als auch die unteren Wälzkörper 18b jeweils in einer gemeinsamen Freistellung 17a und 17b, wobei die Freistellung 17a in einer Lauffläche 23a der Ladenschiene 7 und die Freistellung 17b in einem Laufsteg 22 der Korpusschiene 5 ausgebildet ist. Auf diese Weise sind die Wälzkörper 18a und 18b von der Last der Schublade 3 entlastet. In der Schließstellung ruht die Last auf den unteren und oberen Abstützkörpern 19a, 19b, 19c, welche sich außerhalb der Freistellungen 17a, 17b befinden. Wird nun die Ladenschiene 7 durch eine Person in Ausziehrichtung 24 bewegt, so werden die Wälzkörper 18a und die Wälzkörper 18b nacheinander aus ihrer jeweiligen Freistellung 17a, 17b herausbewegt (Fig. 5b) und durch die Ladenschiene 7 belastet. Anstelle der Abstützkörper 19a, 19b, 19c wirken also nunmehr die Wälzkörper 18a, 18b mit dem Laufsteg 22 der Korpusschiene 5 sowie mit der Lauffläche 23a der Ladenschiene 7 zusammen, was aus Fig. 5c hervorgeht. In Fig. 5c ist auch erkennbar, dass sich die Ladenschiene 7 durch die Wahl der Wälzkörperdurchmesser in einer leichten Schräglage befindet, wobei also das frontseitige Ende 9 der Ladenschiene 7 nach oben weist. Diese Schräglage wird jedoch durch die Belastung der Schublade 3 ausgeglichen, sodass sich die Schublade 3 in einer Offenstellung letztlich in einer (idealen) Horizontalebene verschieben lässt. Zudem verbessert die Schräglage der Ladenschiene 7 das Einspuren der Wälzkörper 18a, 18b beim Schließen der Schublade 3. Der Durchmesser der Wälzkörper 18a, 18b und der Durchmesser der Abstützkörper 19a, 19b nimmt in Richtung zum frontseitigen Ende 9 der Ladenschiene 7 hin ab. Die Freistellungen 17a, 17b weisen jeweils einen im Wesentlichen ebenen Boden 25 sowie Schrägen 26a, 26b auf (Fig. 5c), wodurch die Wälzkörper 18a, 18b ohne eine störende Stoßkante und mit geringem Kraftaufwand in die Freistellungen 17a, 17b gelangen können.

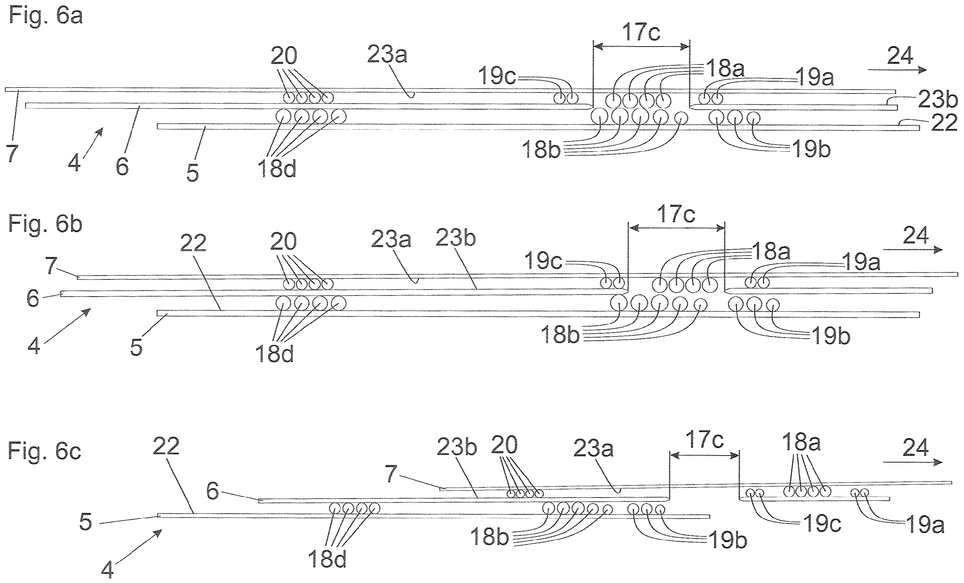

Fig. 6a-6c zeigen schematisch eine weitere Ausführungsform einer Schubladenausziehführung 4, wobei eine Freistellung 17c in Form einer Öffnung oder Aussparung in der Lauffläche 23b der Mittelschiene 6 ausgebildet ist. In der Schließstellung gemäß Fig. 6a befinden sich die Wälzkörper 18a innerhalb der Freistellung 17c der Mittelschiene 6 und sind folglich von der Last der Ladenschiene 7 entlastet. In der Schließstellung wird die Last der Ladenschiene 7 von den Abstützkörpern 19a, 19c aufgenommen. Durch die Freistellung 17c sind aber auch die unteren Wälzkörper 18b entlastet, während die Last in dieser Etage von den unteren Abstützkörpern 19b aufgenommen ist. Bei einer Bewegung der Ladenschiene 7 in Ausziehrichtung 24 wird zunächst die Mittelschiene 6 durch das Zusammenwirken eines Wälzkörpers 18a mit der Mittelschiene 6 angehoben, wobei die unteren Abstützkörper 19b entlastet werden. Bei einer fortgesetzten Bewegung der Ladenschiene 7 in Ausziehrichtung 24 (Fig. 6c) werden die Abstützkörper 19a und 19c entlastet, da die Ladenschiene 7 nunmehr auf den hinteren Wälzkörpern 20 sowie auf den Wälzkörpern 18a mit größerem Durchmesser aufliegt. Die Ladenschiene 7 ist also in einer Offenstellung leicht schräg gestellt, wobei das frontseitige Ende der Ladenschiene 7 nach oben weist. Diese Schräglage der Ladenschiene 7 wird jedoch durch die Belastung ausgeglichen, sodass die Ladenschiene 7 über den gesamten Bewegungsweg im Wesentlichen horizontal verschiebbar ist.

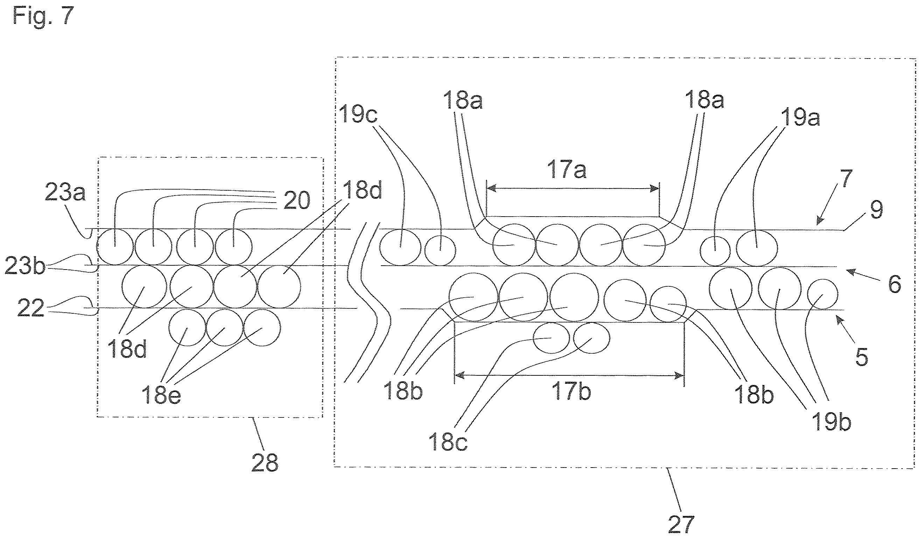

Fig. 7 zeigt ein mögliches Ausführungsbeispiel einer Schubladenausziehführung 4 in einer stark schematisierten Ansicht. Die Korpusschiene 5 weist untere und obere Laufstege 22, die Mittelschiene 6 untere und obere Laufflächen 23b und die Ladenschiene 7 weist eine Lauffläche 23a auf, entlang denen Wälzkörper 18a, 18b, 18c, 18d, 20 abrollbar sind. Eine erste Freistellung 17a ist in der Lauffläche 23a der Ladenschiene 7, eine zweite Freistellung 17b ist im oberen Laufsteg 22 der Korpusschiene 6 angeordnet. Die Freistellungen 17a, 17b sind jeweils so ausgebildet, dass zumindest zwei, vorzugsweise drei oder mehrere, Wälzkörper 18a, 18b des Laufwagens 27 (Fig. 4b) gemeinsam darin aufnehmbar sind. Die Wälzkörper 18a, 18b, 18c sind zusammen mit den Stützkörpern 19a, 19b, 19c in einem gemeinsamen Laufwagen 27 gelagert, während die Wälzkörper 20, 18d, 18e in einem davon gesonderten (schematisch angedeuteten) Laufwagen 28 aufgenommen sind.

Gemäß einem Ausführungsbeispiel kann vorgesehen sein, dass die Wälzkörper 18a jene Wälzkörper mit dem größten Durchmesser der oberen Etage (d.h. zwischen der Mittelschiene 6 und der Ladenschiene 7) sind, wobei die Wälzkörper 18a einen gleichen Durchmesser aufweisen. Die Durchmesser der kleiner ausgebildeten Rollen der Wälzkörper 19a, 19c betragen jeweils weniger als 95% des Durchmessers der Wälzkörper 18a, die Durchmesser der größer ausgebildeten Rollen der Wälzkörper 19a und 19c betragen jeweils weniger als 96% des Durchmessers der Wälzkörper 18a. Die Wälzkörper 18b der unteren Etage (d.h. zwischen der Korpusschiene 5 und der Mittelschiene 6) sind vorzugsweise mit dem größten Durchmesser der gesamten Schubladenausziehführung 4 ausgebildet, sodass also der größte vorkommende Durchmesser der unteren Wälzkörper 18b größer als der größte vorkommende Durchmesser der oberen Wälzkörper 18a ist. In der gezeigten Figur nimmt der Durchmesser der unteren Wälzkörper 18b im gemeinsamen Laufwagen 27 in Richtung zum frontseitigen Ende 9 der Schubladenausziehführung 4 hin - vorzugsweise monoton - ab, wodurch sich die Gewichtskräfte bei einer im ausgezogenen Zustand und unter Belastung befindlichen Schubladenausziehführung 4 gleichmäßiger auf die verschieden großen Wälzkörper 18b verteilen. Der kleinste Durchmesser der unteren Wälzkörper 18b weist etwa 98% des Durchmessers des größten Wälzkörpers 18b auf. Es können auch zumindest drei Abstützkörper 19b im gemeinsamen Laufwagen 27 vorgesehen werden, wobei der Durchmesser dieser Abstützkörper 19b im gemeinsamen Laufwagen 27 in Richtung zum frontseitigen Ende 9 der Schubladenausziehführung 4 hin - vorzugsweise monoton - abnimmt. Die Wälzkörper 20, 18d, 18e sind in einem vom ersten Laufwagen 27 gesonderten Laufwagen 28 aufgenommen und weisen jeweils einen unterschiedlichen Durchmesser auf, wobei die Wälzkörper 20 kleiner als die Wälzkörper 18e und die Wälzkörper 18e kleiner als die Wälzkörper 18d ausgebildet sind.

Die verwendeten Wälzkörper 18a, 18b, 18c (ebenso wie die Wälzkörper 18d, 18e und 20) sind jeweils sind in einem gemeinsamen Laufwagen 27 bzw. 28 gelagert, in dem sie mit einem vorgegebenen Abstand relativ zueinander gehalten sind. Die Wälzkörper 18a, 18b, 18c, 18d, 18e, 20 können auch verschiedene Formen haben, beispielsweise in Form von Kugeln, Zylinderrollen, Scheiben, Nadeln, Kegelrollen oder Tonnen. Erfindungsgemäß ist es vorgesehen, dass zumindest zwei, vorzugsweise drei oder mehrere, Wälzkörper 18a, 18b jeweils in einer gemeinsamen Freistellung 17a, 17b, 17c aufnehmbar sind.

## Patentansprüche

1. Schubladenausziehführung (4), umfassend:
- eine an einem Möbelkorpus (2) zu befestigende Korpusschiene (5),
- zumindest eine Ausziehschiene (6, 7), welche relativ zur Korpusschiene (5) zwischen einer Schließstellung und einer Offenstellung verschiebbar gelagert ist,
- zumindest zwei, insbesondere drei oder mehrere, Wälzkörper (18a, 18b) und zumindest ein Abstützkörper (19a, 19b), welche bei einer Bewegung der Ausziehschiene (6, 7) entlang einem Laufsteg (22) der Korpusschiene (5) und einer Lauffläche (23a, 23b) der Ausziehschiene (6, 7) bewegbar gelagert sind,
- eine am Laufsteg (22) der Korpusschiene (5) und/oder eine an der Lauffläche (23a, 23b) der Ausziehschiene (6, 7) angeordnete Freistellung (17a, 17b, 17c), in welcher die zumindest zwei Wälzkörper (18a, 18b) in der Schließstellung der Ausziehschiene (6, 7) gemeinsam aufnehmbar sind und dabei von der Last der Ausziehschiene (6, 7) entlastet sind und dass in der Schließstellung der Ausziehschiene (6, 7) die Last der Ausziehschiene (6, 7) von dem zumindest einen Abstützkörper (19a, 19b) aufgenommen ist,
- wobei die zumindest zwei Wälzkörper (18a, 18b) und der zumindest eine Abstützkörper (19a, 19b) in einem gemeinsamen Laufwagen (27) angeordnet sind,
**dadurch gekennzeichnet, dass** der Durchmesser der Wälzkörper (18a, 18b) in Richtung zum frontseitigen Ende (9) der Ausziehschiene (6, 7) hin - vorzugsweise monoton - abnimmt.

2. Schubladenausziehführung nach Anspruch 1, **dadurch gekennzeichnet, dass** die zumindest zwei Wälzkörper (18a, 18b), welche sich in der Schließstellung der Ausziehschiene (6, 7) in der Freistellung (17a, 17b, 17c) befinden, in einer Offenstellung der Ausziehschiene (6, 7) von der Last der Ausziehschiene (6, 7) belastet sind.

3. Schubladenausziehführung nach Anspruch 1 oder 2, **dadurch gekennzeichnet, dass** der zumindest eine Abstützkörper (19a, 19b) in einer Offenstellung der Ausziehschiene (6, 7) von der Last der Ausziehschiene (6, 7) entlastet ist.

4. Schubladenausziehführung nach einem der Ansprüche 1 bis 3, **dadurch gekennzeichnet, dass** wenigstens zwei der zwei oder mehreren Wälzkörper (18a, 18b) einen verschiedenen Durchmesser aufweisen.

5. Schubladenausziehführung nach einem der Ansprüche 1 bis 4, **dadurch gekennzeichnet, dass** der Durchmesser des zumindest einen Abstützkörpers (19a, 19b) kleiner als der Durchmesser der wenigstens zwei Wälzkörper (18a, 18b) ist.

6. Schubladenausziehführung nach einem der Ansprüche 1 bis 5, **dadurch gekennzeichnet, dass** zwei oder mehrere Abstützkörper (19a, 19b) vorgesehen sind, welche sich in der Schließstellung der Ausziehschiene (6, 7) außerhalb der Freistellung (17a, 17b, 17c) befinden und dabei die Last der Ausziehschiene (6, 7) aufnehmen.

7. Schubladenausziehführung nach Anspruch 6, **dadurch gekennzeichnet, dass** wenigstens zwei der zwei oder mehreren Abstützkörper (19a, 19b) einen gleichen Durchmesser aufweisen.

8. Schubladenausziehführung nach Anspruch 6, **dadurch gekennzeichnet, dass** der Durchmesser der zwei oder mehreren Abstützkörper (19a, 19b) in Richtung zum frontseitigen Ende (9) der Ausziehschiene (6, 7) hin - vorzugsweise monoton - abnimmt.

9. Schubladenausziehführung nach einem der Ansprüche 1 bis 8, **dadurch gekennzeichnet, dass** die Freistellung (17a, 17b) von einer an der Korpusschiene (5) und/oder an der Ausziehschiene (6, 7) angeordneten oder ausgebildeten Mulde gebildet ist.

10. Schubladenausziehführung nach Anspruch 9, **dadurch gekennzeichnet, dass** die Freistellung (17a, 17b) einen im Wesentlichen ebenen Boden (25) aufweist, wobei die zumindest zwei Wälzkörper (18a, 18b) über zumindest eine Schräge (26a, 26b) in die Freistellung (17a, 17b) hinein bzw. heraus bewegbar ist.

11. Schubladenausziehführung nach einem der Ansprüche 1 bis 8, **dadurch gekennzeichnet, dass** die Freistellung (17c) von einer an der Korpusschiene (5) und/oder an der Ausziehschiene (6, 7) angeordneten Öffnung bzw. Aussparung gebildet ist.

12. Schubladenausziehführung nach einem der Ansprüche 1 bis 11, **dadurch gekennzeichnet, dass** die Schubladenausziehführung (4) eine an einer Schublade (3) zu befestigende Ladenschiene (7) und eine zwischen der Korpusschiene (5) und der Ladenschiene (7) verfahrbar gelagerte Mittelschiene (6) aufweist, wobei die Ausziehschiene von der Mittelschiene (6) und/oder der Ladenschiene (7) gebildet ist.

13. Anordnung mit einer Schubladenausziehführung (4) nach einem der Ansprüche 1 bis 12 und mit einer Schublade (3), welche in Montagelage durch die Schubladenausziehführung (4) relativ zu einem Möbelkorpus (2) verfahrbar gelagert ist.

## Claims

1. A drawer pull-out guide (4), including:
- a carcass rail (5) to be fixed to a furniture carcass (2),
- at least one extension rail (6, 7) which is displaceable relative to the carcass rail (5) between a closed position and an open position,
- at least two, in particular three or more, rolling bodies (18a, 18b) and at least one supporting body (19a, 19b) which are movable along a running limb (22) of the carcass rail (5) and a running surface (23a, 23b) of the extension rail (6, 7) upon a movement of the extension rail (6, 7),
- a clearance (17a, 17b, 17c) arranged on the running limb (22) of the carcass rail (5) and/or on the running surface (23a, 23b) of the extension rail (6, 7), the at least two rolling bodies (18a, 18b) can be jointly accommodated within the clearance (17a, 17b, 17c) in the closed position of the extension rail (6, 7) and are thereby relieved from the load of the extension rail (6, 7), and that in the closed position of the extension rail (6, 7), the load of the extension rail (6, 7) is carried by the at least one supporting body (19a, 19b),
- wherein the at least two rolling bodies (18a, 18b) and the at least one supporting body (19a, 19b) are arranged in a common running carriage (27),
**characterized in that** the diameter of the rolling bodies (18a, 18b), in a direction towards the front end (9) of the extension rail (6, 7), reduces, preferably monotonously.

2. The drawer pull-out guide according to claim 1, **characterized in that** the at least two rolling bodies (18a, 18b) which are arranged within the clearance (17a, 17b, 17c) in the closed position of the extension rail (6, 7) are loaded by the extension rail (6, 7) in an open position of the extension rail (6, 7).

3. The drawer pull-out guide according to claim 1 or 2, **characterized in that** the at least one supporting body (19a, 19b) is relieved from the load of the extension rail (6, 7) in an open position of the extension rail (6, 7).

4. The drawer pull-out guide according to one of the claims 1 to 3, **characterized in that** at least two of the two or more rolling bodies (18a, 18b) have a different diameter.

5. The drawer pull-out guide according to one of the claims 1 to 4, **characterized in that** the diameter of the at least one supporting body (19a, 19b) is smaller than the diameter of the at least two rolling bodies (18a, 18b).

6. The drawer pull-out guide according to one of the claims 1 to 5, **characterized in that** two or more supporting bodies (19a, 19b) are provided which are located outside the clearance (17a, 17b, 17c) in the closed position of the extension rail (6, 7) and thereby carry the load of the extension rail (6, 7).

7. The drawer pull-out guide according to claim 6, **characterized in that** at least two of the two or more supporting bodies (19a, 19b) have a same diameter.

8. The drawer pull-out guide according to claim 6, **characterized in that** the diameter of the two or more supporting bodies (19a, 19b), in a direction towards the front end (9) of the extension rail (6, 7), reduces, preferably monotonously.

9. The drawer pull-out guide according to one of the claims 1 to 8, **characterized in that** the clearance (17a, 17b) is formed by a depression arranged or formed on the carcass rail (5) and/or the extension rail (6, 7).

10. The drawer pull-out guide according to claim 9, **characterized in that** the clearance (17a, 17b) has a substantially flat base (25), wherein the at least two rolling bodies (18a, 18b) can be moved into and out of the clearance (17a, 17b) by way of the at least one slant (26a, 26b).

11. The drawer pull-out guide according to one of the claims 1 to 8, **characterized in that** the clearance (17a, 17b) is formed by an opening or a recess arranged on the carcass rail (5) and/or on the extension rail (6, 7).

12. The drawer pull-out guide according to one of the claims 1 to 11, **characterized in that** the drawer pull-out guide (4) includes a drawer rail (7) to be fixed to a drawer (3) and a central rail (6) which is displaceable between the carcass rail (5) and the drawer rail (7), wherein the extension rail is formed by the central rail (6) and/or the drawer rail (7).

13. An arrangement with a drawer pull-out guide (4) according to one of the claims 1 to 12 and with a drawer (3) which, in the mounted position, is displaceable relative to a furniture carcass (2) by way of the drawer pull-out guide (4).

## Revendications

1. Glissière télescopique de tiroir (4), comprenant :
- un rail de corps (5) à fixer à un corps formant meuble (2),
- au moins un rail télescopique (6, 7), lequel peut être logé de manière déplaçable par rapport au rail de corps (5) entre une position de fermeture et une position d'ouverture,
- au moins deux, en particulier trois ou plus, corps à roulement (18a, 18b) et au moins un corps d'appui (19a, 19b), lesquels, lors d'un mouvement du rail télescopique (6, 7) le long d'une entretoise de roulement (22) du rail de corps (5) et d'une surface de roulement (23a, 23b) du rail télescopique (6, 7), sont logés de façon mobile,
- une position libre (17a, 17b, 17c) disposée sur l'entretoise de roulement (22) du rail de corps (5) et / ou une sur la surface de roulement (23a, 23b) du rail télescopique (6, 7), dans laquelle les au moins deux corps à roulement (18a, 18b) peuvent être logés ensemble dans la position de fermeture du rail télescopique (6, 7) et, ce faisant, sont déchargés de la charge du rail télescopique (6, 7) et en ce que, dans la position de fermeture du rail télescopique (6, 7), la charge du rail télescopique (6, 7) est reçue par l'au moins un corps d'appui (19a, 19b),
- dans laquelle les au moins deux corps à roulement (18a, 18b) et l'au moins un corps d'appui (19a, 19b) sont disposés dans un chariot de roulement commun (27), **caractérisée en ce que** le diamètre des corps à roulement (18a, 18b) diminue - de préférence de façon monotone - dans le sens vers l'extrémité frontale (9) du rail télescopique (6, 7).

2. Glissière de guidage de tiroir selon la revendication 1, **caractérisée en ce que** les au moins deux corps à roulement (18a, 18b), qui se trouvent dans la position de fermeture du rail télescopique (6, 7) dans la position libre (17a, 17b, 17c), sont, dans une position ouverte du rail télescopique (6, 7), chargées de la charge du rail télescopique (6, 7).

3. Glissière de guidage de tiroir selon la revendication 1 ou 2, **caractérisée en ce que** l'au moins un corps d'appui (19a, 19b) est, dans une position ouverte du rail télescopique (6, 7), déchargé de la charge du rail télescopique (6, 7).

4. Glissière de guidage de tiroir selon l'une des revendications 1 à 3, **caractérisée en ce qu'**au moins deux des deux ou plusieurs corps à roulement (18a, 18b) présentent un diamètre différent.

5. Glissière de guidage de tiroir selon l'une des revendications 1 à 4, **caractérisée en ce que** le diamètre de l'au moins un corps d'appui (19a, 19b) est plus petit que le diamètre des au moins deux corps à roulement (18a, 18b).

6. Glissière de guidage de tiroir selon l'une des revendications 1 à 5, **caractérisée en ce que** deux ou plusieurs corps d'appui (19a, 19b) sont prévus, lesquels se trouvent, dans la position de fermeture du rail télescopique (6, 7), à l'extérieur de la position libre (17a, 17b, 17c) et, ce faisant, reçoivent la charge du rail télescopique (6, 7).

7. Glissière de guidage de tiroir selon la revendication 6, **caractérisée en ce qu'**au moins deux des deux ou plusieurs corps d'appui (19a, 19b) présentent un diamètre identique.

8. Glissière de guidage de tiroir selon la revendication 6, **caractérisée en ce que** le diamètre des deux ou plusieurs corps d'appui (19a, 19b) diminue - de préférence de façon monotone - dans le sens vers l'extrémité frontale (9) du rail télescopique (6, 7).

9. Glissière de guidage de tiroir selon l'une des revendications 1 à 8, **caractérisée en ce que** la position libre (17a, 17b) est formée par une cavité rapportée ou façonnée sur le rail de corps (5) et / ou sur le rail télescopique (6, 7).

10. Glissière de guidage de tiroir selon la revendication 9, **caractérisée en ce que** la position libre (17a, 17b) présente un fond essentiellement plan (25), les au moins deux corps à roulement (18a, 18b) pouvant être déplacés à l'intérieur ou à l'extérieur dans la position libre (17a, 17b) par l'intermédiaire d'une surface inclinée (26a, 26b).

11. Glissière de guidage de tiroir selon l'une des revendications 1 à 8, **caractérisée en ce que** la position libre (17c) est formée par une ouverture ou un évidement disposé(e) sur le rail de corps (5) et / ou sur le rail télescopique (6, 7).

12. Glissière de guidage de tiroir selon l'une des revendications 1 à 11, **caractérisée en ce que** la glissière de guidage de tiroir (4) présente un rail de chargement (7) à fixer à un tiroir (3) et un rail central (6) logé de façon déplaçable entre le rail de corps (5) et le rail de chargement (7), le rail télescopique étant formé du rail central (6) et / ou du rail de chargement (7).

13. Dispositif avec une glissière de guidage de tiroir (4) selon l'une des revendications 1 à 12 et avec un tiroir (3), lequel, en position de montage, est logé de façon déplaçable par rapport à un corps de meuble (2) par la glissière de guidage de tiroir (4).
